# EUROPEAN PATENT APPLICATION

(11) **EP 3 422 201 A1**
(43) Date of publication of application: **02.01.2019**
(21) Application number: 17305818.1
(22) Date of filing: 29.06.2017
(51) Int. Cl.: G06F 17/27

(54) **METHOD AND APPARATUS FOR CORRECTING TEXT**

(71) Applicant: Thomson Licensing, 92130 Issy-les-Moulineaux (FR)
(72) Inventor: STAHL, Niclas, 92443 Issy-Les-Moulineaux (FR)
(74) Representative: Vidon Brevets & Stratégie

(57) **Abstract**

A method (200) of correcting text is provided including auto-correcting (220) a spelling of a word in a sequence of words according to a first language to generate a first corrected sequence of words including a corrected word for the word, storing (230) the word in a database and correcting (250) the first corrected sequence of words based on the database to generate a second corrected sequence of words when it is determined that the first corrected sequence of words is in a second language. An apparatus (160-1, 160-2, 160-n) for correcting text is provided, the apparatus including a processor (172), and at least one memory (176) coupled to the processor, the processor being configured to perform any of the embodiments of the method. A computer-readable storage medium and a non-transitory computer-readable program product are also described.

## Description

### TECHNICAL FIELD

The present disclosure relates to correcting and/or spell checking of text, in particular, associated with determining a language of the text.

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

In today's connected world, it has become common for people to speak in multiple languages and to exchange written information (email, text, tweets, social network entries, etc.) in multiple languages, sometimes transitioning from one language to another within the same message. The fast pace of communications has made features like spell check and auto-correction particularly useful.

In computing, a spell check (or spell checker) is an application program that flags words in a document that may not be spelled correctly based on a dictionary. Spell checkers may be stand-alone, capable of operating on a block of text, or as part of a larger application, such as a word processor or text editors, email client, electronic dictionary, or search engine.

Text replacement, replace-as-you-type or auto-correct is an automatic data validation function commonly found in word processors and text editing interfaces for computers, smartphones, tablet computers, etc. The main purpose of auto-correct feature is, as part of the spell checker, to correct common spelling or typing errors, saving time for the user. It is also used to automatically format text or insert special characters by recognizing particular character usage, saving the user from having to use more tedious functions. Additional options may include the first letters of sentences, names and correcting accidental use of caps lock. Auto-correct may be a feature or option associated with a spell check, or may be a separate application program.

In order to spell check and/or auto-correct a text, the language must be identified or established by a system setting. In natural language processing, language identification is the problem of determining the natural language or dialect of the given content. Computational approaches to this problem view it as a special case of text categorization, solved with various statistical methods using different techniques to classify the data. One technique is to compare the compressibility of the text to the compressibility of texts in a set of known languages. This approach is known as mutual information based distance measure. Another technique is to create a language n-gram model from a "training text" for each of the languages. The n-gram models can be based on characters or encoded bytes.

However, most systems still struggle to balance language identification with spell check and auto-correct. Therefore, there is a need to identify techniques that correct text while determining the language of the text. The present disclosure is directed towards such a technique.

### SUMMARY

According to an aspect of the present disclosure, a method is provided including auto-correcting a spelling of a word in a sequence of words according to a first language to generate a first corrected sequence of words including a corrected word for the word, storing the word in a database and correcting the first corrected sequence of words based on the database to generate a second corrected sequence of words when it is determined that the first corrected sequence of words is in a second language.

According to an aspect of the present disclosure, an apparatus is provided, the apparatus including a processor, and at least one memory coupled to the processor, the processor being configured for auto-correcting a spelling of a word in a sequence of words according to a first language to generate a first corrected sequence of words including a corrected word for the word, storing the word in a database and correcting the first corrected sequence of words based on the database to generate a second corrected sequence of words when it is determined that the first corrected sequence of words is in a second language.

According to an aspect of the present disclosure, a non-transitory computer-readable program product is provided including program code instructions for performing any of the embodiments of the method described above.

According to an aspect of the present disclosure, a computer-readable storage medium carrying a software program is provided including program code instructions for performing any of the embodiments of the method described above.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

Additional features and advantages of the present disclosure will be made apparent from the following detailed description of illustrative embodiments which proceeds with reference to the accompanying figures.

### BRIEF DESCRIPTION OF THE DRAWINGS

The present disclosure may be better understood in accordance with the following exemplary figures briefly described below:
FIG. 1 illustrates a block diagram of an exemplary content distribution and communication network system in accordance with an embodiment of the present disclosure; and
FIG. 2 illustrates a flowchart of an exemplary method of correcting text in accordance with an embodiment of the present disclosure.;

### DETAILED DISCUSSION OF THE EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present disclosure is directed to techniques for correcting text in, e.g., word processor or text editors, email client, electronic dictionary, and/or search engine capable of handling multiple languages and while determining the language of the text. In the following the term language is interchangeably used as language or dialect of a language (e.g., American versus British English).

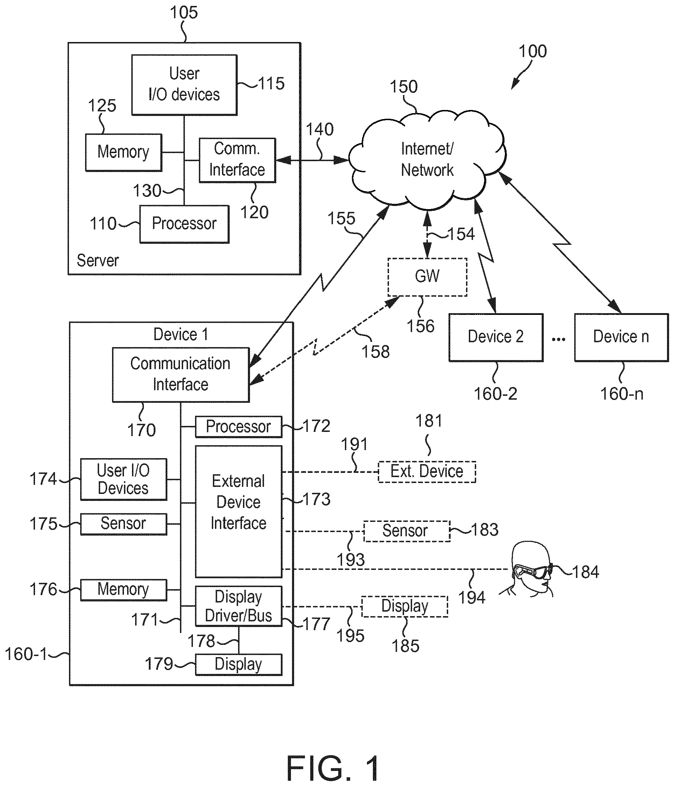

FIG. 1 illustrates a simplified block diagram of an exemplary content distribution and communication network system 100 in accordance with an embodiment of the present disclosure. System 100 may process general multimedia content, including video, audio, text and data. System 100 may include a server or service provider 105 which is capable of receiving and processing user requests from one or more of user devices 160-1 to 160-n. The server 105 may be, for example, a content server. The content server, in response to a user request for content, may provide program content including various multimedia assets such as, but not limited to, movies or TV shows for viewing, streaming or downloading by users using the devices 160-1 to 160-n, or coupled to the devices 160-1 to 160-n. The devices 160-1 to 160-n may be any consumer electronic device, e.g., a computer, a laptop, a tablet, a smart phone, a smart watch, a television, a set-top box, a gateway, etc. The server or service provider may provide other services besides content delivery, including email, social networks, E-commerce (e.g., online shopping), etc.

Various exemplary user devices 160-1 to 160-n may communicate with the exemplary server 105 and/or each other (e.g., smart phones) over a communication network 150 such as the Internet, a wide area network (WAN), and/or a local area network (LAN). Server 105 may communicate with user devices 160-1 to 160-n in order to provide and/or receive relevant information such as recommendations, user ratings, metadata, web pages, media contents, sales offers, sales requests, etc., to and/or from user devices 160-1 to 160-n thru the network connections. Server 105 may also provide additional processing of information and data when the processing is not available and/or capable of being conducted on the local user devices 160-1 to 160-n. As an example, server 105 may be a computer having a processor 110 such as, e.g., an Intel processor, running an appropriate operating system such as, e.g., Windows 2008 R2, Windows Server 2012 R2, Linux operating system, etc. According to the present disclosure, processor 110 may execute software to perform and control the various functions and components of server 105.

FIG. 1 also illustrates further details of server or service provider 105. Processor 110 may control the various functions and components of the server 105 via a control bus 130. Server 105 may also include a memory 125 which may represent at least one of a transitory memory such as RAM, and a non-transitory memory such as a ROM, a Hard Disk Drive (HDD), a Compact Disk (CD) drive or Digital Video Disk (DVD) drive, and/or a flash memory, for processing and storing different files and information as necessary, including computer program products and software, webpages, user interface information, user profiles, user recommendations, user ratings, metadata, electronic program listing information, databases, search engine software, etc., as needed. Search engine and recommender software may be stored in the non-transitory memory 125 of server 105, as necessary, so that media recommendations may be provided, e.g., in response to a user's profile and rating of disinterest and/or interest in certain media assets, and/or for searching using criteria that a user specifies using textual input (e.g., queries using "sports", "adventure", "Angelina Jolie", etc.).

In addition, a server administrator may interact with and configure server 105 to run different applications using different user input/output (I/O) devices 115 as well known in the art. The user I/O or interface devices 115 of the exemplary server 105 may represent e.g., a mouse, touch screen capabilities of a display, a touch and/or a physical keyboard for inputting user data. The user interface devices 115 of the exemplary server 105 may also include a speaker or speakers, and/or other user indicator devices, for outputting visual and/or audio sound, user data and feedback.

Furthermore, server 105 may be connected to network 150 through a communication interface 120 for communicating with other servers or web sites (not shown) and one or more user devices 160-1 to 160-n, as shown in FIG. 1. The communication interface 120 may also represent television signal modulator and RF transmitter in the case when the content provider 105 represents a television station, cable or satellite television provider, or other wireless content provider. In addition, one skilled in the art would readily appreciate that other well-known server components, such as, e.g., power supplies, cooling fans, etc., may also be needed, but are not shown in FIG. 1 to simplify the drawing.

User devices 160-1 to 160-n may be devices including one or more displays. The device may employ optics such as lenses in front of each display. In another embodiment, displays and optics may be embedded in a helmet, in glasses, or in a wearable visor which are a part of the device or coupled to the device. The device 160-1 to 160-n may also include one or more sensors and/or external auxiliary devices, as further described below.

User devices 160-1 to 160-n may be one or more of but are not limited to, e.g., a PC, a laptop, a tablet, a smart phone, a smart watch, a video receiver, a smart television (TV), an HMD device or smart glasses, a set-top box, a gateway, or the like. An example of such devices may be, e.g., a Microsoft Windows 10 computer/tablet/laptop, an Android phone/tablet, an Apple IOS phone/tablet, a Sony TV receiver, or the like. A simplified block diagram of an exemplary user device according to the present disclosure is illustrated in block 160-1 of FIG. 1 as Device 1, and is further described below. Similar components and features may also be present in the other user devices 160-2 to 160-n in FIG. 1.

User device 160-1 may be directly coupled to network/Internet/ 150 by wired or wireless means through connection or link 155, or through gateway 156 and connections or links 154 and 158. However, in one embodiment of the present disclosure, user device 160-1 is not connected or coupled to the network/Internet 150 or to other devices (e.g., gateway 156). User device 160-1 may include a processor 172 representing at least one processor for processing various data and signals, and for controlling various functions and components of the device 160-1, including video encoding/decoding and processing capabilities in order to play, display, and/or transport video content, text and data. The processor 172 may communicate with and controls the various functions and components of the device 160-1 via a control bus 171.

User device 160-1 may also include a display 179 which is driven by a display driver/bus component 177 under the control of processor 172 via a display bus 178. The display 179 may be a touch display. In addition, the type of the display 179 may be, e.g., Liquid Crystal Display (LCD), Light Emitting Diode (LED), Organic Light Emitting Diode (OLED), etc. In addition, an exemplary user device 160-1 according to the present disclosure may have its display outside of the user device, or an additional or a different external display may be used to display the content provided by the display driver/bus component 177. This is illustrated, e.g., by an exemplary external display 185 which is connected through an external display connection 195 of device 160-1. The connection may be a wired or a wireless connection.

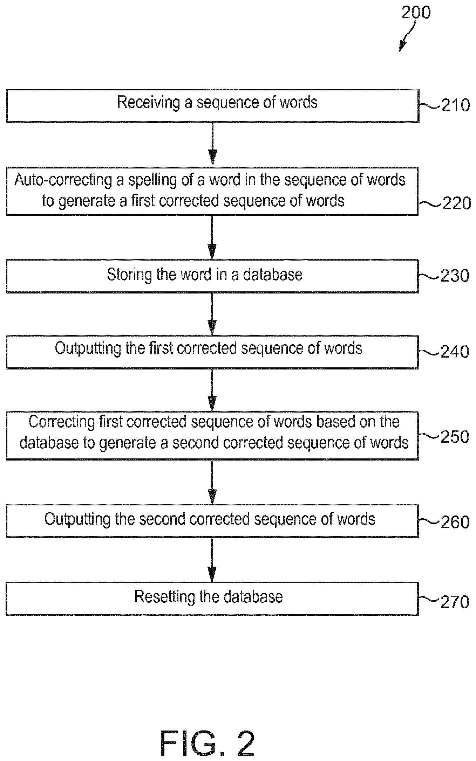

Exemplary user device 160-1 may also include a memory 176 which may represent at least one of a transitory memory such as a RAM, and a non-transitory memory such as a ROM, an HDD, a CD drive, a DVD drive, and/or a flash memory, cache and registers for processing and storing different files and information as necessary, including computer program products and software (e.g., as represented by flow chart diagram 200 of FIG. 2 to be discussed below), webpages, user interface information, databases, etc., as needed. In addition, device 160-1 may also include a communication interface 170 for coupling and communicating to/from server 105 and/or other devices, via, e.g., the network 150 using the link 155, Communication interface 170 may also couple device 160-1 to gateway 156 using the link 158. Links 155 and 158 may represent a connection through, e.g., an Ethernet network, a cable network, a FIOS network, a Wi-Fi network, and/or a cellphone network (e.g., 3G, 4G, LTE, 5G), etc. Communication interface may include receiver and/or transmitter circuits well-known by those skilled in the pertinent art.

According to the present disclosure, an exemplary device 160-1 may also include a sensor 175. In an exemplary embodiment, sensor 175 may be at least an audio sensor such as a microphone, a visual sensor such as a camera (video or picture), and/or other types of sensors.

In another non-limiting embodiment according to the present disclose, an exemplary external sensor 183 may be separate from and coupled to the user device 160-1 (e.g., placed in the room walls, ceiling, doors, inside another device, on the user, etc.). The exemplary external sensor(s) 183 may have wired or wireless connections 193, respectively, to the device 160-1 via an external device interface 173 of the device 160-1, as shown in FIG. 1. External sensor(s) 183 may be, e.g., a microphone, a visual sensor such as a camera (video or picture), etc. In accordance with the present disclosure, sensor data, e.g., from sensor 175 and/or 183, may be provided to processor 172 of user device 160-1 via processor bus 171 for further processing.

In addition, exemplary device 160-1 may also include user input/output (I/O) devices 174. The user I/O or interface devices 174 of the exemplary device 160-1 may represent e.g., a mouse, a remote control, a joystick, a touch sensitive surface (e.g. a touchpad or a tactile screen), touch screen capabilities of a display (e.g., display 179 and/or 185), a touch screen and/or a physical keyboard for inputting user data. The user interface devices 174 of the exemplary device 160-1 may also include a speaker or speakers, and/or other user indicator devices, for outputting visual and/or audio sound, user data and feedback. Information from user input devices may be used to process the content, create content (e.g., text from a keyboard) or manage user interfaces.

It is to be understood that sensors 175, 183 and user input devices 174 communicate with the processor 172 within the user device 160-1 through wired or wireless communication interfaces.

In another non-limiting exemplary embodiment in accordance with the present disclosure, as shown in FIG. 1, device 160-1 may be coupled to at least one external or auxiliary device 181, via external device interface 173 and link 191. Device 181 may be, e.g., a smart phone, a tablet, a remote control, a keyboard device, etc. The external device 181 may include a touch sensitive surface (e.g. a touchpad or a tactile screen) to be utilized as a user interface (UI).

In another non-limiting exemplary embodiment in accordance with the present disclosure, as shown in FIG. 1, device 160-1 may be coupled to a virtual reality, augmented reality (AR), or immersive HMD device or smart glasses 184 via external device interface 173 and link 194.

It is to be understood that the connections or links in FIG. 1, including 140, 155, 154, 158, 191-195 may each independently be a wired or a wireless connection.

It is to be understood that the various individual components of system 100 in FIG. 1 may be well-known circuits or mechanical components by a person of ordinary skill in the pertinent art and will not be described in detail. It is to be further understood that the example described in FIG. 1 is not exhaustive and other arrangements may be chosen without departing from the scope of the present disclosure.

Exemplary user devices 160-1 to 160-n may include application software for text creation or editing (e.g., Microsoft Word) resident in its memory 176 (e.g., HDD) independent of a network connection or service. In this case, user devices 160-1 to 160-n may not be connected or coupled to other devices or to a network to access and utilize these features. Exemplary devices 160-1 to 160-n may also access services that include text creation/editing (e.g., Cloud based editors) or text inputs, including email (e.g., Microsoft Outlook), social network exchanges (e.g,, Twitter, Facebook), smart phone texting services, internet search engines (e.g., Google), etc. The text based applications and services may include some form of spell checking and/or auto-correct, and/or language detection features. The features may be selected/enabled by the user or may be determined by the service provider/server.

According to the present disclosure, a problem appears when a sequence of words or text is received (e.g., input by a user using keyboard 174 or 181 or touch display 179, 185, or received by communication interface 170) in a language that is not a current language of the system settings (e.g., a default language). The auto-correct feature of the spell checker may try to automatically correct some errors in words as they are typed. At the same time, the spell checker may try to determine if the user is writing in a second language different from the current language. As a result, the spell checker may sometimes "correct" words that are received or typed in the second language because it is set for the current language different from the second language and assumes that the words are "incorrect". Once the spell checker determines that the text is in the second language, the spell checker revisits the text under the second language dictionary and may then flag that the "corrected" words are actually incorrect in the second language. The language determination may be performed according to any of the techniques well-known by those skilled in the pertinent art.

For example, the following French phrase is typed into an email message with a default language setting of English: "On a depose une description complete pour cette invention." The auto-correct feature for an English default language may correct it to: "On a depose une description complete pour cette invention." Hence, the words "depose" and "complete" are corrected words in English. Once the French language is detected within a few words or even phrases of text, the spell checker may object to the following underlined words: On a depose une description complete pour cette invention." The failure of the spell checker to recognize the problem and correct it is clearly unsatisfactory in an environment where a user writes in different languages (at least languages using a more or less similar alphabet).

In a first embodiment according to the present disclosure, a solution to the problem is proposed whereby a table, database or buffer may store the original words in the sequence of words or text that are being auto-corrected prior to a language determination. The corrected sequence of words replaces the original words deemed to be incorrect with the corresponding corrected words according to a first language (e.g., the default language of choice).

The table, database or memory may be stored in memory 176 (e.g., in RAM, or in processor 172 cache or registers). The table is generally small, since it generally takes a few words or phrases for a language determination to be made. In an average computer system, the sequence of words is output to or stored in a temporary or temp file or buffer while a user enters the text (e.g., via keyboard 174 or 181 or touch display 179, 185). The temp file also utilizes RAM or processor 172 cache memory. In a system that uses the Cloud, the temp file and/or the database may be outside the device 160-1 to 160-n, but accessible by the device. The corrected sequence of words is also stored in the temp file as the words are auto-corrected according to the first language and overwrite the original sequence of words.

Once the language determination is made and the language is determined to be a second language (e.g., French) different from the first language (e.g., English), the device 160-1 according to the present disclosure, particularly processor 172, compares words stored in the table or database (which are original words of the sequence of words) with the words in the "corrected" sequence of words, which satisfy the first language. The comparison between the original words stored in the database and the words in the corrected sequence of words (which are stored in the temp file or buffer) may be performed based on a metric and a threshold. The metric may measure a distance between characters or bytes of each word, according to well-known methods by those skilled in the pertinent art. For example, a threshold of two characters may be given, whereby words are considered similar if less than or equal to two characters. If more than two characters are in error, then the words being compared are not similar, that is, dissimilar. Other threshold values may be used. The metric may also be based on the context of a number of words instead of characters of a word.

Once an original word stored in the database is determined to be similar to the word in the corrected sequence of words (that is, once a match is found or determined), processor 172 replaces the word in the corrected sequence of words with the original word, generating a second corrected sequence of words. The idea of the present embodiment is to recover the words that were originally received and were correct in the second language. The second corrected sequence of words may be equal to the original sequence of words. The second corrected sequence of words may be correct according to the second language. The second corrected sequence of words may then be output to or stored in the temp file in memory 176 and/or output to display 179, 185.

In a second embodiment according to the present disclosure, the table, database or buffer may store the original words in the sequence of words or text that are being auto-corrected prior to a language determination and additionally the corrected words corresponding to the original words. Each original word and corresponding corrected word are associated in the table or database. Once the language determination is made and the language is determined to be a second language (e.g., French) different from the first language (e.g., English), the processor 172, compares the corrected words stored in the table or database) with the words in the corrected sequence of words, which satisfy the first language. The comparison between the corrected words stored in the database and the words in the corrected sequence of words is simpler than in the previous embodiment, since it should be a perfect match. Once the match is determined, the processor 172 replaces the word in the corrected sequence of words that matches a corrected word stored in the database with the corresponding original word stored in the database, generating a second corrected sequence of words. Similarly to the first embodiment, the idea of the present embodiment is to recover the words that were originally received and were correct in the second language. The second corrected sequence of words may be equal to the original sequence of words. The second corrected sequence of words may be correct according to the second language. The second corrected sequence of words may then be output to or stored in the temp file in memory 176 and/or output to display 179, 185.

In a third embodiment according to the present disclosure, the table or database may be generated according to the first embodiment or the second embodiment. Once a match is found, the spelling of the original word stored in the database is checked according to the second language to confirm that it is actually correct in the second language. The original word stored in the database replaces the corrected word in the corrected sequence of words when the original word is correct according to the second language. If the original word stored in the database is not correct according to the second language, no replacement is made of the corrected word in the corrected sequence of words. In yet another embodiment, if the original word stored in the database is not correct according to the second language, the original word is first corrected according to the second language and then used to replace the corrected word in the sequence of corrected words. The third embodiment prevents misspellings or typographical errors in words that are common to both the first language and the second language. For example, in the previous example of the French phrase, the word "description" is the same in both languages. If it had been originally typed "descrition" and auto-corrected to "description", the third embodiment would keep the corrected word, instead of replacing it with the original word "descrition", which is mispelled.

The third embodiment is also helpful in the case of two phrases in the sequence of words: the first one in English and the second one in French. For example, the first phrase may be: "A disclosure need to describe the invention." The first phrase is followed by the French phrase previously described: "On a depose une description complete pour cette invention." Notice that the word "need" in the first phrase is incorrect and may be auto-corrected to "needs". Hence, the word "need" is added to the table or database, according to the first embodiment of the invention. Also, the corrected word "needs" is further added to the table or database, according to the second embodiment of the invention. Once the French phrase is typed/entered and corrected, the words "déposé" and "complète" are added to the database as well, according to the first embodiment. And the words "depose" and "complete" may also be added to the database according to the second embodiment. Ordinarily, the database does not distinguish the languages. However, since the word "need" is not correct according to the French language, no replacement is made of the corrected word "needs" with the original word "need" after a match is determined. Therefore, only the French words will be corrected after the match is determined.

In a fourth embodiment according to the present disclosure, the table or database may be generated according to the first embodiment or the second embodiment. Once a match is found, the spelling of the corrected word in the corrected sequence of words is checked according to the second language to confirm if it is actually correct in the second language. The original word stored in the database replaces the corrected word in the corrected sequence of words when the corrected word is incorrect according to the second language. If the corrected word is correct according to the second language, no replacement is made of the corrected word in the corrected sequence of words. The fourth embodiment also prevents misspellings or typographical errors in words that are common to both the first language and the second language. For example, in the previous example of the French phrase, the word "description" is the same in both languages. If it had been originally typed "descrition" and auto-corrected to "description", the fourth embodiment would keep the corrected word, instead of replacing it with the original word "descrition", which is mispelled.

In a fifth embodiment according to the present disclosure, the table or database may be reset by processor 172 once the second corrected sequence of words is generated or once a language determination is made that the language is the current or first language. Resetting a database may include resetting the contents of the database or just returning a pointer (e.g., memory address pointer) to the beginning of the database, such that the data may be overwritten. The step of resetting may be optional, bypassed or removed.

FIG. 2 illustrates a flowchart 200 of an exemplary method of correcting text in accordance with one embodiment of the present disclosure. The method 200 includes, at step 220, auto-correcting a spelling of a word in a sequence of words according to a first language to generate a first corrected sequence of words including a corrected word for the word. Then, at step 230, the method 200 includes storing the word in a database. Finally, at step 250, the method 200 includes correcting the first corrected sequence of words based on the database to generate a second corrected sequence of words when it is determined that the first corrected sequence of words is in a second language. Steps 220, 230 and 250 may be performed, e.g., by devices 160-1, 160-2, 160-n, particularly, processor 172. The database may be stored, e.g., in memory 176.

According to one embodiment of the method, the step 230 of storing may further include storing the corrected word in the database, and the step 250 of correcting the first corrected sequence of words may further include replacing the corrected word in the first corrected sequence of words with the stored word when the stored corrected word matches the corrected word.

According to one embodiment of the method, the step 250 of correcting the first corrected sequence of words may further include replacing the corrected word in the first corrected sequence of words with the stored word when the stored word is similar to the corrected word according to a metric criterion. The metric may measure a distance between characters or bytes of each word, according to well-known methods by those skilled in the pertinent art. The metric may also be based on the context of a number of words instead of characters of a word.

According to one embodiment, the method may further include, at step 260, outputting the second corrected sequence of words. The outputting may further include outputting the stored word in place of the corrected word.

According to one embodiment, the method may further include, at step 240, outputting the first corrected sequence of words. The outputting may be one word at a time as the word is received or typed, and auto-corrected. The first corrected sequence of words includes the corrected word. The step 240 of outputting may further include outputting the corrected word in place of the word. The step 240 of outputting may be optional, bypassed or removed.

According to one embodiment of the method, the step 250 of correcting the first corrected sequence of words may further include determining that the sequence of words is in a second language.

According to one embodiment, the method may further include, at step 210 receiving the sequence of words. The step of receiving may be performed by, e.g., processor 172. The sequence of words may be, e.g., input by a user using keyboard 174 or 181 or touch display 179, 185, or received by communication interface 170.

According to one embodiment of the method, the step 220 of auto-correcting a spelling may further include checking a spelling of the word. The step 220 may be performed, e.g., by processor 172. The spelling of the word may be checked against an auto-correct database or dictionary based on a metric. The metric may measure a distance between characters or bytes of each word, according to well-known methods by those skilled in the pertinent art. The metric may also be based on the context of a number of words instead of characters of a word.

According to one embodiment of the method, the steps 240 and 260 of outputting are each at least one of outputting to a file and outputting for display. The file may be a temporary file or buffer stored in, e.g., memory 176. The display may be, e.g., display 179, 181.

According to one embodiment of the method, the step 250 of correcting the first corrected sequence of words may further include checking a spelling of the corrected word according to the second language prior to replacing, and the step of replacing may further include replacing the corrected word when the corrected word is incorrect according to the second language.

According to one embodiment of the method, the step 250 of correcting the first corrected sequence of words may further include checking a spelling of the stored word according to the second language prior to replacing, and the step of replacing may further include replacing the corrected word when the stored word is correct according to the second language.

According to one embodiment, the method may further include, at step 270, resetting the database. Resetting a database may include resetting the contents of the database or just returning a pointer (e.g., memory address pointer) to the beginning of the database, such that the data may be overwritten. The step 270 may be performed by, e.g., processor 172. The step 270 of resetting may be optional, bypassed or removed.

It is to be understood that any of the embodiments of the method 200 described above may be implemented by any of the devices 160-1, 160-2, 160-n, particularly processor 172.

According to an aspect of the present disclosure, an apparatus 160-1, 160-2, 160-n for correcting text comprising a processor 172 and at least one memory 176 coupled to the processor 172, the processor 172 configured for auto-correcting a spelling of a word in a sequence of words according to a first language to generate a first corrected sequence of words including a corrected word for the word, storing the word in a database and correcting the first corrected sequence of words based on the database to generate a second corrected sequence of words when it is determined that the first corrected sequence of words is in a second language.

According to an aspect of the present disclosure, an apparatus 160-1, 160-2, 160-n for correcting text comprising a processor 172 and at least one memory 176 coupled to the processor 172, the processor 172 configured to perform any of the embodiments of the method 200 of correcting text.

Moreover, method 200 may be implemented as a computer program product comprising computer executable instructions which may be executed by a processor. The computer program product having the computer-executable instructions may be stored in the respective non-transitory computer-readable storage media of the respective above mentioned device(s).

According to an aspect of the present disclosure, a non-transitory computer-readable program product is provided including program code instructions for performing any of the embodiments of the method 200 of correcting text.

It is important to note that one or more of the elements in the process 200 may be combined, performed in a different order, or excluded in some embodiments while still implementing the aspects of the present disclosure. For example, in one embodiment of the method 200, steps 230 and 240 may be performed simultaneously or may be reversed in order. Other steps may be performed in parallel, where the processor does not wait for a full completion of a step before starting another, e.g., steps 220 and 230, steps 220 and 240, or steps 250 and 260.

Furthermore, aspects of the present disclosure can take the form of a computer-readable storage medium. Any combination of one or more computer-readable storage medium(s) may be utilized. A computer-readable storage medium can take the form of a computer-readable program product embodied in one or more computer-readable medium(s) and having computer-readable program code embodied thereon that is executable by a computer. A computer-readable storage medium as used herein is considered a non-transitory storage medium given the inherent capability to store the information therein as well as the inherent capability to provide retrieval of the information therefrom. A computer-readable storage medium may be, for example, but is not limited to, an electronic, magnetic, optical, electromagnetic, infrared, or semiconductor system, apparatus, or device, or any suitable combination of the foregoing.

It is to be appreciated that the following list, while providing more specific examples of computer-readable storage mediums to which the present disclosure may be applied, is merely an illustrative and not exhaustive listing as is readily appreciated by one of ordinary skill in the art. The list of examples includes a portable computer diskette, a hard disk, a ROM, an erasable programmable read-only memory (EPROM or Flash memory), a portable compact disc read-only memory (CD-ROM), an optical storage device, a magnetic storage device, or any suitable combination of the foregoing.

According to an aspect of the present disclosure, a computer-readable storage medium carrying a software program is provided including program code instructions for performing any of the embodiments of the method 200 of correcting text.

It is to be appreciated that the various features shown and described are interchangeable. Unless otherwise indicated, a feature shown in one embodiment may be incorporated into another embodiment. Further, the features described in the various embodiments may be combined or separated unless otherwise indicated as inseparable or not combinable.

As noted before, the functions of the various elements shown in the figures may be provided through the use of dedicated hardware as well as hardware capable of executing software in association with appropriate software. Also, when provided by a processor, the functions may be provided by a single dedicated processor, by a single shared processor, or by a plurality of individual processors, some of which may be shared.

It is to be further understood that, because some of the constituent system components and methods depicted in the accompanying drawings are preferably implemented in software, the actual connections between the system components or the process function blocks may differ depending upon the manner in which the present disclosure is programmed. Given the teachings herein, one of ordinary skill in the pertinent art will be able to contemplate these and similar implementations or configurations of the present disclosure.

Although the illustrative embodiments have been described herein with reference to the accompanying drawings, it is to be understood that the present disclosure is not limited to those precise embodiments, and that various changes and modifications may be effected therein by one of ordinary skill in the pertinent art without departing from the scope of the present disclosure. In addition, individual embodiments can be combined, without departing from the scope of the present disclosure. All such changes and modifications are intended to be included within the scope of the present disclosure as set forth in the appended claims.

## Claims

1. A method (200) comprising:
auto-correcting (220) a spelling of a word in a sequence of words according to a first language to generate a first corrected sequence of words including a corrected word for said word;
storing (230) the word in a database; and
correcting (250) said first corrected sequence of words based on the database to generate a second corrected sequence of words when it is determined that said first corrected sequence of words is in a second language.

2. An apparatus (160-1, 160-2, 160-n) including a processor (172) and at least one memory (176) coupled to the processor, said processor configured for:
auto-correcting a spelling of a word in a sequence of words according to a first language to generate a first corrected sequence of words including a corrected word for said word;
storing the word in a database; and
correcting said first corrected sequence of words based on the database to generate a second corrected sequence of words when it is determined that said first corrected sequence of words is in a second language.

3. The method according to claim 1 wherein said storing (230) further comprises, or the apparatus (160-1, 160-2, 160-n) according to claim 2 wherein said processor is further configured for:
storing said corrected word in the database; and said correcting (250) said first corrected sequence of words further comprises:
replacing said corrected word in the first corrected sequence of words with said stored word when the stored corrected word matches the corrected word.

4. The method according to claim 1 wherein said correcting (250) said first corrected sequence of words further comprises, or the apparatus (160-1, 160-2, 160-n) according to claim 2 wherein said processor is further configured for:
replacing said corrected word in the first corrected sequence of words with said stored word when the stored word is similar to the corrected word according to a metric criterion.

5. The method according to claims 3 or 4 further comprising, or the apparatus (160-1, 160-2, 160-n) according to claims 3 or 4 wherein said processor is further configured for:
outputting (260) said second sequence of corrected words.

6. The method according to any of the previous claims further comprising, or the apparatus (160-1, 160-2, 160-n) according to any of the previous claims wherein said processor is further configured for:
outputting (240) said first corrected sequence of words.

7. The method according to any of the previous claims wherein said correcting (250) said first corrected sequence of words further comprises, or the apparatus (160-1, 160-2, 160-n) according to any of the previous claims wherein said processor is further configured for:
determining that said sequence of words is in a second language.

8. The method according to any of the previous claims further comprising, or the apparatus (160-1, 160-2, 160-n) according to any of the previous claims wherein said processor is further configured for:
receiving (210) said sequence of words.

9. The method according to any of the previous claims wherein said auto-correcting (220) a spelling further comprises, or the apparatus (160-1, 160-2, 160-n) according to any of the previous claims wherein said processor is further configured for:
checking a spelling of said word.

10. The method according to any of the previous claims, or the apparatus (160-1, 160-2, 160-n) according to any of the previous claims wherein said outputting is at least one of outputting to a file and outputting for display.

11. The method according to any of claims 3-10 wherein said correcting (250) said first corrected sequence of words further comprises, or the apparatus (160-1, 160-2, 160-n) according to any of claims 3-10 wherein said processor is further configured for:
checking a spelling of said corrected word according to said second language prior to replacing; and said replacing further comprises:
replacing said corrected word when said corrected word is incorrect according to said second language.

12. The method according to any of claims 3-11 wherein said correcting (250) said first corrected sequence of words further comprises, or the apparatus (160-1, 160-2, 160-n) according to any of claims 3-11 wherein said processor is further configured for:
checking a spelling of said stored word according to said second language prior to replacing; and said replacing further comprises:
replacing said corrected word when said stored word is correct according to said second language.

13. The method according to any of the previous claims further comprising, or the apparatus (160-1, 160-2, 160-n) according to any of the previous claims wherein said processor is further configured for:
resetting (270) said database.

14. A computer-readable storage medium carrying a software program comprising program code instructions for performing the method according to any of claims 1 to 12.

15. A non-transitory computer-readable program product comprising program code instructions for performing the method according to any of claims 1 to 12 when the program is executed by a computer.
